# EUROPEAN PATENT APPLICATION

(11) **EP 2 228 981 A1**
(43) Date of publication of application: **15.09.2010**
(21) Application number: 09013901.5
(22) Date of filing: 05.11.2009
(51) Int. Cl.: H04N 1/00

(54) **Display system and display method**

(30) Priority: 27.02.2009 JP 2009045930
(71) Applicant: Kabushiki Kaisha Toshiba, Minato-ku, Tokyo 105-8001 (JP)
(72) Inventor: Nishimura, Hayato, Tokyo (JP)
(74) Representative: HOFFMANN EITLE

(57) **Abstract**

A display system includes: a connector unit configured to be connected to an external memory; an operation module configured to set a still image selection mode and a still image display mode; a still image selector configured to determine whether still images are stored in the external memory connected to the connector unit and to transmit the selected still image from the external memory in response to a selection input from the operation module during the still image selection mode; a nonvolatile memory configured to store the selected still image transmitted from the external memory; and a signal processor configured to generate a still image display signal for displaying a still image stored in the nonvolatile memory in response to a still image display input from the operation module during the still image display mode.

## Description

### CROSS REFERENCE TO RELATED APPLICATION(S)

The present disclosure relates to the subject matters contained in Japanese Patent Application No. 2009-045930 filed on February 27, 2009, which are incorporated herein by reference in its entirety.

### FIELD

The present invention relates to a display system and a display method for displaying a still image on a display device as a digital photo frame.

### BACKGROUND

In recent years, the number of functions of a television (TV) set has been increased and TV sets having a photo viewer function has been developed. An example of a TV set having the photo viewer function is described in JP-A-11-275503. The TV set described in the publication JP-A-11-275503 can be connected to a digital still camera and photo images stored in a memory can be viewed on the TV set in a state where the digital still camera is connected to the TV set or in a state where the memory extracted from the camera is mounted thereon.

Regarding the display of a still image, a digital photo frame display function which continuously displays still images is known as a function similar to the photo viewer function. In the past, it was suggested that the digital photo frame display function is assigned to a TV set. In the suggested TV set, at least one still image is previously stored in an internal memory at the time of manufacturing of the TV set, and the still image can be called out as needed and can be displayed in a digital photo frame.

User's demands for the improvement of various functions of a TV set have increased and there is thus a need for displaying a still image in a digital photo frame corresponding to the user's taste, in addition to the photo viewer function. However, in the suggested TV set, only the still image prepared by a maker is displayed as a digital photo frame and a function of inputting and displaying a user's favorite still image on a display device as a digital photo frame is not provided. Accordingly, users require improvements of the digital photo frame display function. Particularly, when displaying a digital photo frame, user prefers to change the settings of the digital photo frame by a simple operation to display additional information as desired by the user.

### SUMMARY

One of objects of the present invention is to provide a display system and a display method capable of improving the convenience of a display function of displaying a still image such as a digital photo frame function.

According to an aspect of the present invention, there is provided a display system including: a connector unit configured to be connected to an external memory; an operation module configured to set a still image selection mode and a still image display mode; a still image selector configured to determine whether still images are stored in the external memory connected to the connector unit and to transmit the selected still image from the external memory in response to a selection input from the operation module during the still image selection mode; a nonvolatile memory configured to store the selected still image transmitted from the external memory; and a signal processor configured to generate a still image display signal for displaying a still image stored in the nonvolatile memory in response to a still image display input from the operation module during the still image display mode.

According to another aspect of the present invention, there is provided a display method for a system having a still image selection mode for selecting a still image to be transmitted, the method including: detecting that still images are stored in an external memory connected to a connector unit; transmitting the selected still image from the external memory to a nonvolatile memory in response to input on the selection of a still image; storing the still image in the nonvolatile memory; selecting the still image from the nonvolatile memory in response to still image display input; and generating and displaying a still image displaying signal for displaying the selected still image.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram schematically illustrating a configuration of a television (TV) set according to an embodiment of the invention.
Fig. 2 is a diagram illustrating various operation keys disposed in a remote controller shown in Fig. 1.
Fig. 3 is a flowchart illustrating a command process performed by a micro processor shown in Fig. 1.
Fig. 4 is a diagram illustrating the change of a display screen obtained in the command process shown in Fig. 3.
Fig. 5 is a diagram illustrating the change of a display screen obtained when "SELECTION OF PHOTO" is selected in a digital photo frame setting screen shown in Fig. 4.
Fig. 6 is a flowchart illustrating a process of allowing the micro processor to receive a still image from an external memory to a flash memory when the external memory is connected to a USB connector or a card connector shown in Fig. 1.
Fig. 7 is a flowchart illustrating a still image receiving process in the TV set shown in Fig. 1.
Fig. 8 is a diagram illustrating the change of a display screen obtained when "PHOTO EDIT" is selected in the digital photo frame setting screen shown in Fig. 5.
Fig. 9 is a flowchart illustrating a process of allowing the micro processor shown in Fig. 1 to delete a still image registered in the flash memory.
Fig. 10 is a flowchart specifically illustrating an additional information setting process shown in Fig. 3.
Fig. 11 is a diagram illustrating a preview screen obtained when "ADDITIONAL INFORMATION SET" is selected in the digital photo frame setting screen shown in Fig. 5.
Fig. 12 is a flowchart illustrating a digital photo frame displaying process shown in Fig. 3.
Fig. 13 is a flowchart specifically illustrating a process of displaying a digital photo frame of a registered still image shown in Fig. 12.
Fig. 14 is a flowchart specifically illustrating an analog clock image combining process shown in Fig. 10.
Fig. 15 is a flowchart specifically illustrating a calendar image combining process shown in Fig. 10.
Fig. 16 is a flowchart specifically illustrating a weather forecast image combining process shown in Fig. 10.
Fig. 17 is a flowchart specifically illustrating a divination image combining process shown in Fig. 10.

### DETAILED DESCRIPTION OF THE EMBODIMENTS

Hereinafter, a television set according to an embodiment of the invention will be described with reference to the accompanying drawings.

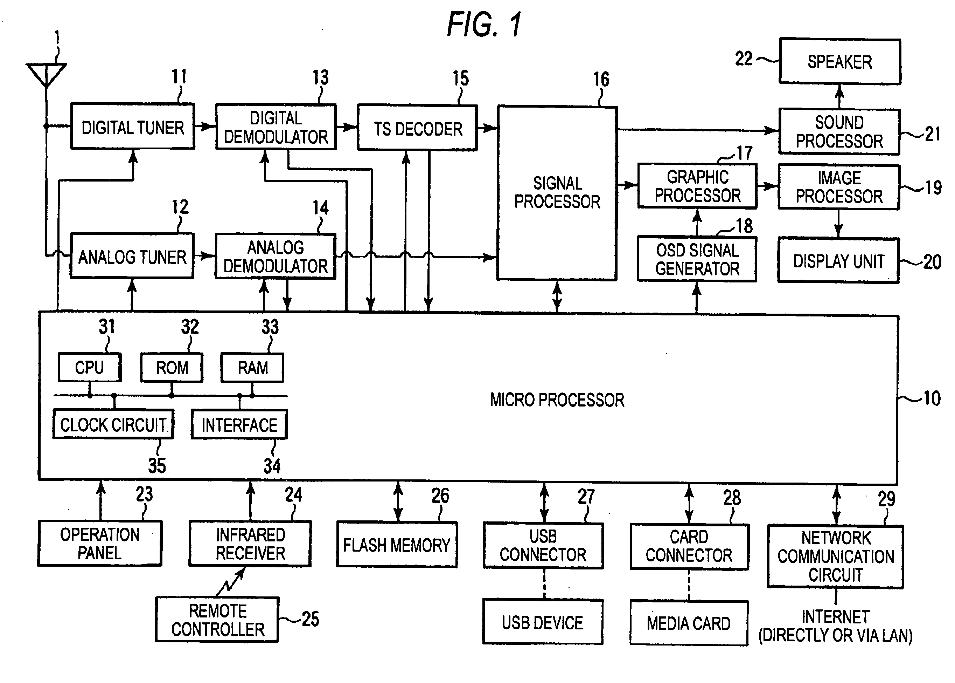

Fig. 1 schematically shows a configuration of a television (TV) set according to an embodiment of the invention. The TV set is capable of receiving terrestrial analog broadcast waves as well as BS, CS, and terrestrial digital broadcast waves, and includes a micro processor 10, a digital tuner 11, an analog tuner 12, a digital demodulator 13, an analog demodulator 14, and a TS decoder 15.

The BS, CS, and terrestrial digital broadcast waves are received by an antenna 1 and the received signals are supplied to the digital tuner 11. Similarly, the terrestrial analog broadcast waves are received by the antenna 1 and the received signals are supplied to the analog tuner 12. The digital tuner 11 and the analog tuner 12 employ a phase-locked loop (PLL) scheme and are used to designate reception parameters such as center frequency and bandwidth and to select desired broadcast waves under the control of the micro processor 10.

The received signals of the broadcast waves selected by the digital tuner 11 are sequentially supplied to the digital demodulator 13 and the TS decoder 15 of an OFDM (Orthogonal Frequency Division Multiplexing) system, for example, in Japan, and are demodulated and decoded into digital image signals and sound signals thereby. The received signals selected by the analog tuner 12 are supplied to the analog demodulator 14 and are demodulated into analog image signals and sound signals thereby.

The TV set further includes a signal processor 16, a graphic processor 17, an OSD (On-Screen Display) signal generator 18, an image processor 19, a display unit 20, a sound processor 21, a speaker 22, an operation panel 23, an infrared receiver 24, a remote controller 25, a flash memory 26, a USB (Universal Serial Bus) connector 27, a card connector 28, and a network communication circuit 29. The signal processor 16 selectively performs various digital signal processing on the digital image signal and sound signal from the TS decoder 15 and outputs the resultant signals respectively to the graphic processor 17 and the sound processor 21. The signal processor 16 selectively digitalizes the analog image signal and sound signal from the analog demodulator 14, performs various digital signal processing on the digitalized image signal and sound signal, and outputs the resultant signals respectively to the graphic processor 17 and the sound processor 21.

The graphic processor 17 selectively overlaps an OSD signal generated by the OSD signal generator 18 with the digital image signal output from the signal processor 16 and outputs the resultant signal. The image processor 19 performs a conversion process such as size adjustment of adapting the digital image signal output from the graphic processor 17 to the display unit 20. The display unit 20 displays an image corresponding to the image signal output from the image processor 19. The sound processor 21 performs a conversion process such as the sound adjustment involved in adapting the digital sound signal output from the signal processor 16 to the speaker 22. The speaker 22 reproduces the sound corresponding to the sound signal output from the sound processor 21.

The micro processor 10 receives operation information from the operation panel 23 or operation information sent from the remote controller 25 and received by the infrared receiver 24 and controls the respective components to reflect the operation details. Here, the operation panel or keyboard 23 and the remote controller 25 correspond to the operation module serving as a user interface. As shown in Fig. 1, the micro processor 10 includes a CPU (Central Processing Unit) 31 for performing a variety of processes and controls, a ROM (Read Only Memory) 32 for storing the control program of the CPU 31 and various initial data, a RAM (Random Access Memory) 33 for providing a work area for temporarily storing input and output information of the CPU 31, an interface 34 for inputting and outputting setting information and control information of the components via an I²C bus, and a clock circuit 35 which is corrected on the basis of time and date information acquired using broadcast waves and networks.

The USB connector 27 is provided for connection to various USB devices. The card connector 28 is provided for connection to various media cards. The network communication circuit 29 is connected to the Internet directly or via a LAN (Local Area Network). When the time information is acquired from the broadcast waves or when basic data such as time information, weather, and divination is acquired from the signal received by the antenna 1 via the network, the acquired data is input to the micro process 10 from the network communication circuit 29.

In the stage of shipping the TV set, at least one photo image (preinstalled still image) and various registration information used to display the photo image in a digital photo frame are stored by a manufacturer in advance in the flash memory 26 as nonvolatile memory. As will be described later, a still image designated by the user using the USB connector 27, the card connector 28, or the network communication circuit 29 can be received as a photo still image along with type information as additional information added to the digital photo frame. The received still image is stored as a variety of registration information in the flash memory 26. The registration information is not limited to the favorite photo still image to be displayed in a digital photo frame and the type information as additional information to be added to the digital photo frame, but also may include setting information and image subject information as additional information. Here, the image subject information is registered in advance as preinstalled registration information in the flash memory 26. A variety of registration information may be received via the USB connector 27, the card connector 28, or the network communication circuit 29, or may be received and updated via the USB connector 27, the card connector 28, or the network communication circuit 29.

To perform a photo viewer function or a digital photo frame function, the micro processor 10 receives one or more photo images stored as a file in a USB memory connected to the USB connector 27 or a media card connected to the card connector 28, controls the signal processor 16, the graphic processor 17, and the image processor 19 to process the photo images, and controls the displaying of the photo images on the display unit 20. The digital photo frame function is embodied as an operation of the TV set performed in a digital photo frame mode. In the digital photo frame mode, the user selects a favorite photo image from one or more photo images stored in the USB memory or the photo image media card, for example, by operating the remote controller 25 or operating the operation panel 23, and the micro processor 10 registers the favorite photo image in the flash memory 26. After the registration, the micro processor 10 controls the OSD signal generator 18 and the like to display the favorite photo image as a photo on the display unit 20 and to further overlap the additional information image on the digital photo frame. Here, the micro processor 10, the signal processor 16, the graphic processor 17, the OSD signal generator 18, and the image processor 19 constitute a display control module performing a display control process of acquiring the basic data as additional information on the photo in the digital photo frame mode, combining the additional information image to display the additional information corresponding to the basic data, and overlapping the additional information image with the displayed photo on the basis of the independent settings of the additional information.

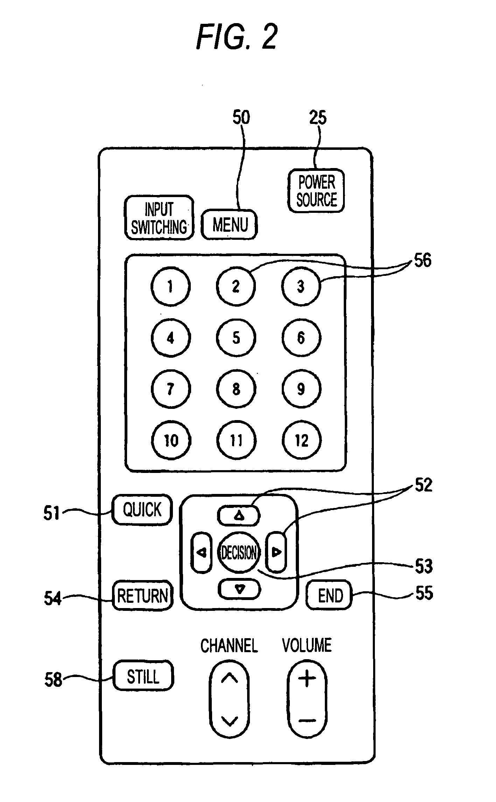

Fig. 2 shows various operation keys provided in the remote controller 25. A user can display selection items on the display unit 20 by operating a main menu key 50 or a quick menu key 51, select the selection items by operating up, down, left, and right direction keys 52, and decide the selection result by operating a decision key 53. A return key 54 is operated to return the screen and an end key 55 is operated to notify an end of an operation. Channel keys 56 are operated to cancel the selection of broadcast waves or the display of the digital photo frame. The remote controller 25 includes a still key 58. When the still key 58 is pushed with an intention to store a still image from a video in broadcast, the still image of the scene can be stored in the built-in memory such as the RAM 33. The still image stored in the RAM 33 can be registered in the flash memory 26 and can be used to display the photo, by selecting the still image as a favorite still image in the digital photo frame mode.

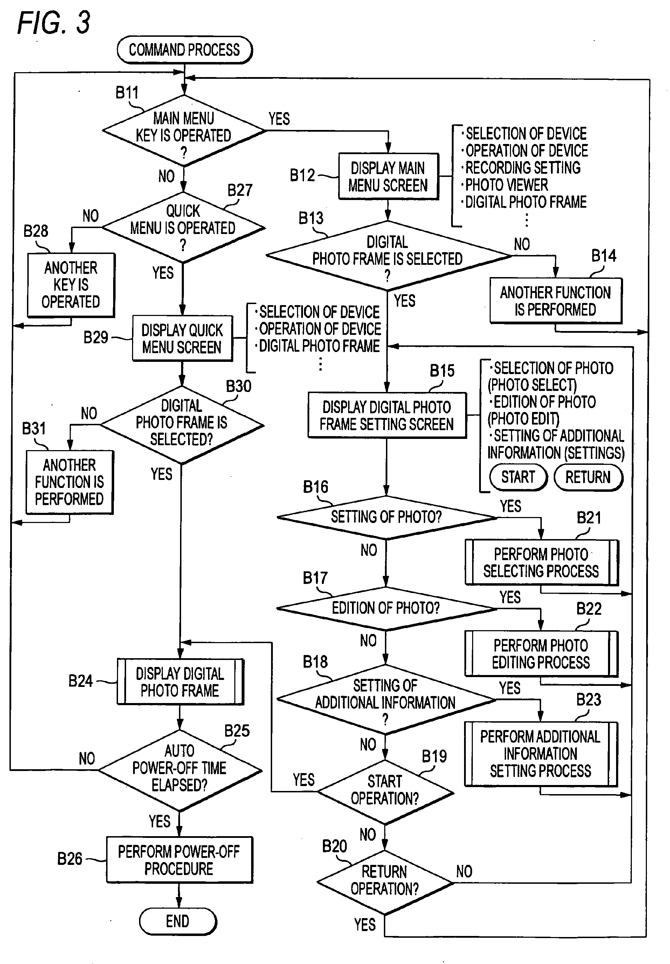

Fig. 3 shows a command process performed by the micro processor 10. This command process is performed on the basis of a command acquired as operation information at the time of operating the operation panel 23 or the remote controller 25.
The command process will be schematically described with reference to Fig. 3.

When the command process is started, it is determined in block B11 whether the main menu key is operated. When the operation on the main menu key is detected, a main menu screen is displayed in block B12. The main menu screen includes function selecting items such as "SELECTION OF DEVICE", "OPERATION OF DEVICE", "SETTING OF RECORDING", "PHOTO VIEWER", AND "DIGITAL PHOTO FRAME." After the main menu screen is displayed, it is determined in block B13 whether "DIGITAL PHOTO FRAME" is selected. When the selection of "DIGITAL PHOTO FRAME" is not detected, another functional process is performed in block B 14 and the process of block B11 is then performed again.

When "DIGITAL PHOTO FRAME" is selected in block B 13, this selection is determined as the settings of the digital photo frame mode (still image selecting mode) including the selection of the photo and a digital photo frame setting screen is displayed in block B15. Selection items such as "SELECTION OF PHOTO", "EDITION OF PHOTO", "SETTING OF ADDITIONAL INFORMATION", "START", and "RETURN" are displayed in the digital photo frame setting screen. The operations of selecting these items are detected in blocks B16 to B20. Here, in "SELECTION OF PHOTO", as will be described later, the still images of an external memory can be displayed, a still image to be received can be selected, and the selected still image can be received.

When the operation of selecting "EDITION OF PHOTO" is detected in block B17, a photo editing process is performed in block B22. When the processes of blocks B21 to B23 are finished, the process of block B 15 is performed again. When the operation of selecting "RETURN" is detected in block B20, the process of block B11 is performed again.

When the operation of selecting "START" of the display of the digital photo frame is detected in block B19, a digital photo frame displaying process is performed in block B24. That is, the digital photo frame display mode (still image display mode) is set and the digital photo frame is displayed. In displaying the digital photo frame, data of the still image selected from the flash memory is supplied to the signal processor 16 via the micro processor 10. The signal processor 16 converts the data of the still image into a frame signal and supplies the frame signal to the graphic processor 17. The graphic processor 17 adds the additional information to be described later as an additional image to the frame signal and supplies the added signal to the image processor 19. Therefore, a digital photo frame to which the additional information is added is displayed. When the digital photo frame displaying process is finished, it is determined in block B25 whether the auto power-off time has passed. When it is determined that the auto power-off time has passed, a power-off procedure of the TV set is performed in block B26. The command process is ended after the performing of the power-off procedure. On the other hand, when it is not determined in block B25 that the auto power-off time has passed, the process of block B11 is performed again.

When the operation of the main menu key is not detected in block B11, it is determined in B27 whether the quick menu key has been operated. When the operation of the quick menu key is detected, a quick menu screen is displayed in block B29. The quick menu screen includes function selecting items such as "SELECTION OF DEVICE", "OPERATION OF DEVICE", and "DIGITAL PHOTO FRAME." After the quick menu screen is displayed, it is determined in block B30 whether "DIGITAL PHOTO FRAME" is selected. When the selection of "DIGITAL PHOTO FRAME" is not detected, another key operating process is performed in block B28 and the process of block B11 is performed again. When the selection of "DIGITAL PHOTO FRAME" is detected, this selection is determined as the setting of the digital photo frame mode and a photo displaying process in the photo display mode (still image display mode) is performed in block B24, similarly to the case where the selection of "START" in the digital photo frame setting screen is detected. When the digital photo frame displaying process is finished, it is determined in block B25 whether the auto power-off time has passed. When it is determined that the auto power-off time has passed, the power-off procedure of the TV set is performed in block B26. The command process is ended after the power-off procedure is performed. On the other hand, when the passing of the auto power-off time is not detected in block B25, the process of block B11 is performed again.

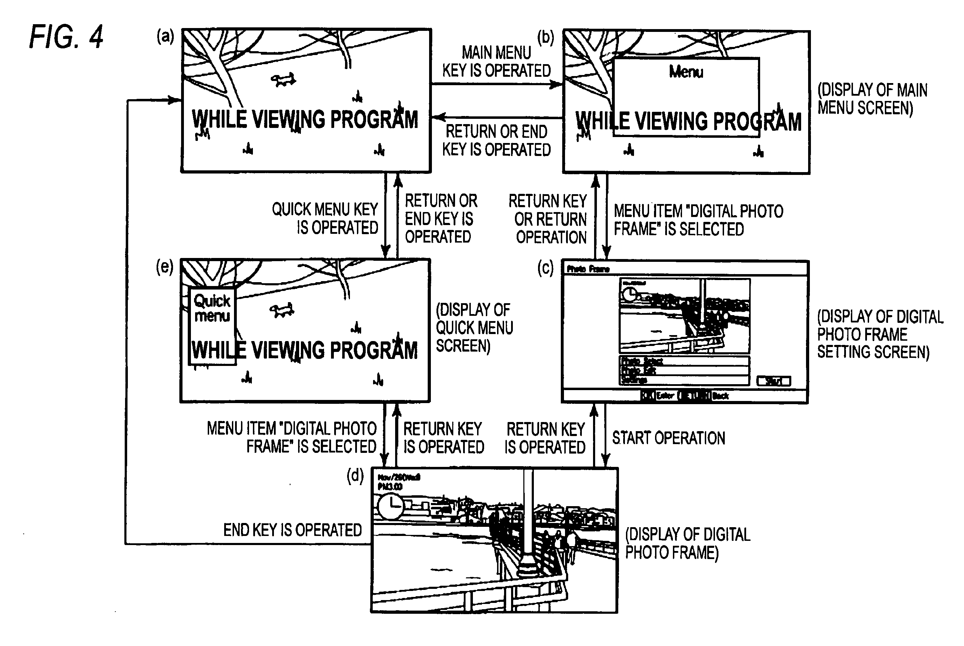

Sections (a) to (e) shown in Fig. 4 show a change of a display screen acquired in the command process shown in Fig. 3. When the main menu key is operated while viewing a broadcast program as shown in section (a) of Fig. 4, the main menu screen is displayed on the display unit 20 to overlap with the video of the broadcast program at the center thereof as shown in section (b) of Fig. 4. Here, when "DIGITAL PHOTO FRAME" is operated, the digital photo frame setting screen is displayed instead of the video of the broadcast program and the main menu screen as shown in section (c) of Fig. 4. At this time, when the operation of starting the display of the photo is selected in the digital photo frame setting screen, the photo image is displayed as per the settings of the digital photo frame as shown in section (d) of Fig. 4. In displaying the digital photo frame, the additional information image such as an analog clock is displayed to overlap on the digital photo frame in which the favorite photo image is displayed. In addition, the digital photo frame occupies the entire display screen of the display unit 20.

When the quick menu key is operated while viewing the broadcast program as shown in section (a) of Fig. 4, the quick menu screen is displayed on the display unit 20 to overlap with the image of the broadcast program in the vicinity of the left edge as shown in section (e) of Fig. 4. When the settings of the photo have been completed and the display of "DIGITAL PHOTO FRAME" is selected, the display of the digital photo frame setting screen shown in section (c) of Fig. 4 is omitted and the digital photo frame is quickly displayed in accordance with the settings of the digital photo frame as shown in section (d) of Fig. 4. The display screen can be returned to the previous screen by operating one of the return key and the end key or performing the return operation as shown in sections (a) to (d) of Fig. 4. The operation of the channel number keys returns the display screen to the video display of the broadcast program.

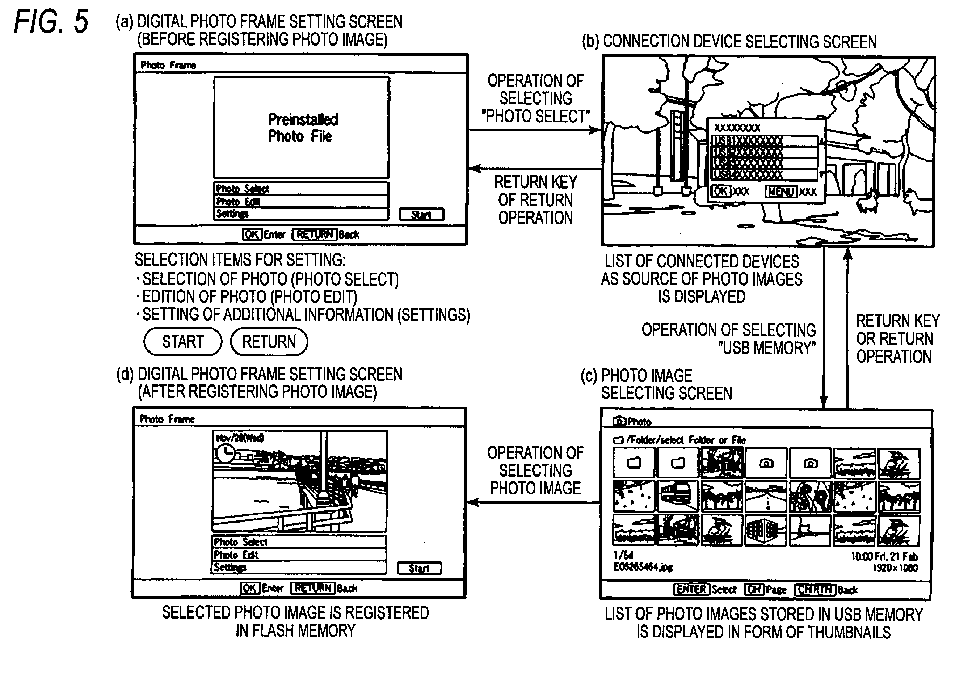

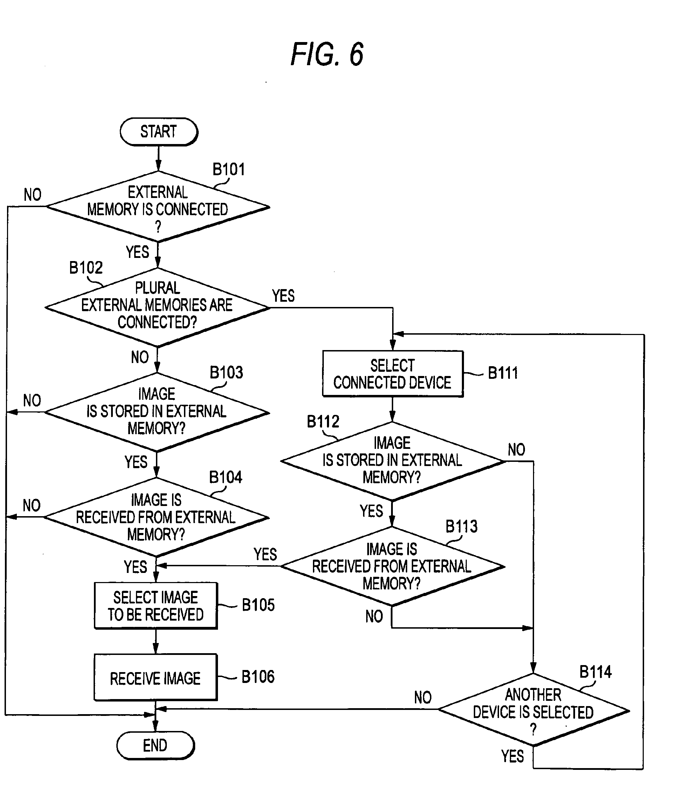

Sections (a) to (c) shown in Fig. 5 show a change of a display screen when "SELECTION OF PHOTO" is selected in the digital photo frame setting screen shown in section (c) of Fig. 4 and a still image for the digital photo frame is received. As shown in section (a) of Fig. 5, "SELECTION OF PHOTO" is selected from "SELECTION OF PHOTO" ("Photo Select" in the screen), "EDITION OF PHOTO" ("Photo Edit" in the screen), and "SETTING OF ADDITIONAL INFORMATION" ("Setting" in the screen) which are displayed in the digital photo frame setting screen, "SELECTION OF PHOTO" is started. In the selection of photo, as shown in Fig. 6, it is first determined in block B101 whether an external memory is connected to the USB connector 27 or the card connector 28 so as to receive a photo. When the connection of the external memory is not detected, the photo selecting process is ended along with a display of "EXTERNAL MEMORY IS NOT CONNECTED." Therefore, when a user wants to select a photo from the external memory, the external memory is connected to the USB connector 27 or the card connector 28 and "SELECTION OF PHOTO" is selected again in the digital photo frame setting screen.

When it is determined in block B101 that an external memory is connected to the USB connector 27 or the card connector 28, it is determined in block B 102 whether plural external memories are connected to plural USB connectors 27 and/or card connectors 28. When it is detected that plural external memories are connected to the USB connectors 27 and/or the card connectors 28, the titles of the USB connectors 27 and/or the card connectors 28 mounted with the plural external memories are displayed in a list on the screen as shown in section (b) of Fig. 5. When a connected device is selected in the list display of connected devices, the connected device is selected in block B111. When the connected device is selected, it is determined in block B 112 whether any still image is stored in the external memory mounted on the selected connected device. Here, when no still image is stored, it is displayed that no still image is stored in the selected external device and an inquiry screen is displayed for inquiring whether another external device which has not been selected should be selected. When it is determined in block B 113 that another external device is not selected, the photo selecting process is ended along with a display of "SELECTION OF EXTERNAL DEVICE IS CANCELLED." When it is detected in block B113 that another external device is selected, the selection of a connected device is detected again in block B111.

When it is detected in block B 112 that a still image is stored in the external memory mounted on the selected connected device, an inquiry screen of "SHOULD IMAGE BE RECEIVED FROM SELECTED DEVICE?" is displayed. When "RECEPTION OF IMAGE" is not selected in the inquiry screen of "RECEPTION OF IMAGE", an inquiry screen on whether another external device should be selected is displayed. When it is detected in block B113 that another external device is not selected, the photo selecting process is ended along with a display of "SELECTION OF EXTERNAL DEVICE IS CANCELLED." When it is determined in block B113 that another external device has been selected, the connected device is selected in block B111 again. When it is detected in block B113 that "RECEPTION OF IMAGE " is selected in the inquiry screen of "RECEPTION OF IMAGE", a list of photo images stored in the external memory such as a USB memory is displayed in the form of thumbnails as shown in section (c) of Fig. 5.

When it is detected in block B102 that a single external memory is connected to the USB connector 27 or the card connector 28, it is detected whether a still image is stored in the connected external memory in block B103. When no still image is stored, "NO IMAGE IS STORED IN EXTERNAL MEMORY" is displayed and the photo selecting process is ended. Therefore, when a user wants to select a photo from an external memory, a new external memory is connected to the USB connector 27 or the card connector 28 and "SELECTION OF PHOTO" is selected in the digital photo frame setting screen again.

When it is detected in block B103 that a still image is stored in the connected external memory, an inquiry screen of "RECEPTION OF IMAGE" is displayed. When "RECEPTION OF IMAGE " is not selected in the inquiry screen of "RECEPTION OF IMAGE", the selection of the reception of a still image from the external memory is not detected and the photo selecting process is ended in block B104 as a result of the reception of an image from the external device not being selected. When the reception of a still image from the external memory is selected, a list of photo images stored in the external memory such as a USB memory is displayed in the form of thumbnails as shown in section (c) of Fig. 5.

When a still image to be received is selected in the display of thumbnails shown in section (c) of Fig. 5, the thumbnail image is displayed active. When the start of the reception of the active still image is selected, the start of reception of an image is detected in block B106 and the still image is transmitted to and stored in the flash memory 26. When the reception of an image is finished in block B106, the selected still image is displayed and "RECEPTION OF IMAGE IS FINISHED" is displayed as shown in section (d) of Fig. 5. When an end request is selected in the screen, the usual screen in viewing a programs show in section (c) of Fig. 4 is displayed again.

The screen used for selecting a connected device or the screen used for selecting a photo image can be returned to the previous screen by the operation of the return key or the return operation as shown in sections (a) to (d) of Figs. 4. The display screen can be returned to the image display of the broadcast program using the channel number keys.

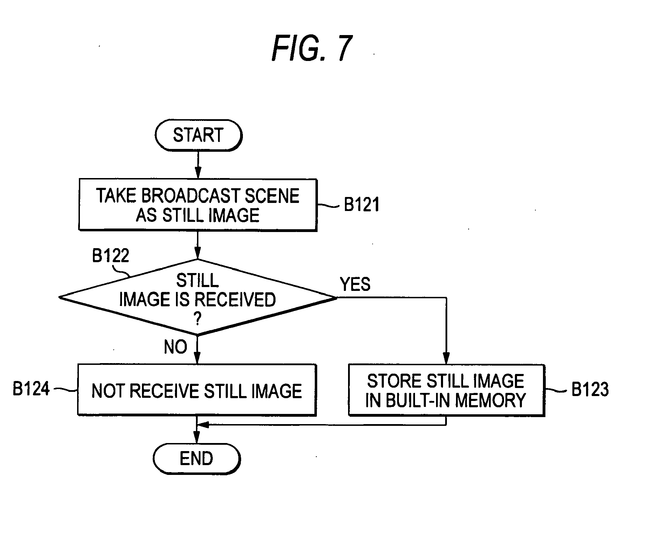

A still image cannot be only received from an external device but also a broadcast scene from a broadcast can be extracted as a still image and the extracted still image can be registered as a favorite photo image in the flash memory 26. When the broadcast scene from a broadcast is extracted as a still image, an operation of extracting the broadcast scene from a broadcast is started as shown in Fig. 7. When the still button 58 of the remote controller 25 shown in Fig. 2 is pushed, it is detected in block B121 shown in Fig. 7 that the still button 58 is pushed, one scene of the broadcast video is specified, the frame signal of the scene is extracted from the signal processor 16 and is temporarily stored in the RAM 33. At the time of selecting the broadcast scene, it is preferable that program name, broadcast channel, and date and time of the broadcast scene, as the still image information, is simultaneously extracted as scene information and is temporarily stored in the RAM 33 along with the frame signal of the scene. With the pressing of the still button 58, a still image of the scene is displayed on the display unit 20. When extracting and registering the still image of the scene in the flash memory 26, the still button 58 or the decision button 53 is pressed again. When it is detected in block B122 that the still button 58 or the decision button 53 is pressed, the still image is transmitted from the RAM 33 to the flash memory 26 along with the scene information and is stored and registered in block B123. When the storing and registering is detected in block B123, the still image on the RAM 33 is deleted and the process is then ended. When the still image displayed on the display unit 20 is not registered, the return button 54 of the remote controller 25 is pressed. Therefore, the still image on the display unit 20 is cancelled and the display screen returns to the broadcast. The cancellation with the return button 54 is detected in block B124, the preparation for transmitting the still image to the flash memory 26 is cancelled, the still image on the RAM 33 is deleted, and the process is ended.

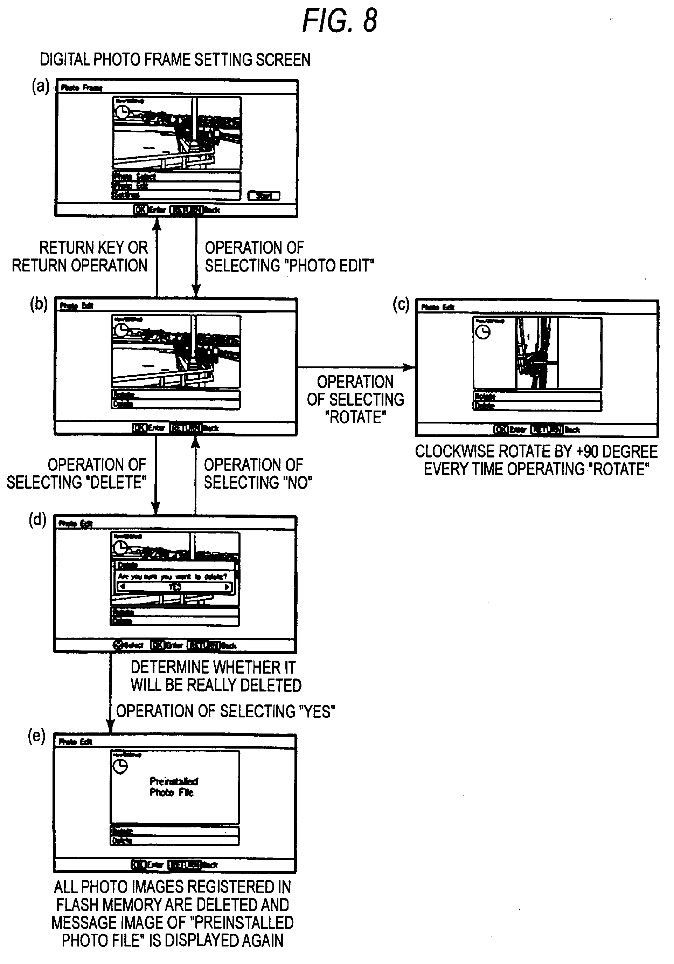

Sections (a) to (e) shown in Figs. 8 show a change of the display screen obtained when "EDITION OF PHOTO" is selected in the digital photo frame setting screen shown in section (a) of Fig. 5. When "EDITION OF PHOTO" ("Photo Edit" in the screen) is selected in the digital photo frame setting screen shown in section (a) of Fig. 8, a favorite photo image stored in the flash memory 26 is displayed in the digital photo frame setting screen along with editing selection items such as "ROTATION" ("Rotate" in the screen) or "DELETION" ("Delete" in the screen) as shown in section (b) of Fig. 8. For example, when "ROTATION" is selected, the photo image rotates by +90 degree whenever "ROTATION" is selected as shown in section (c) of Fig. 8.

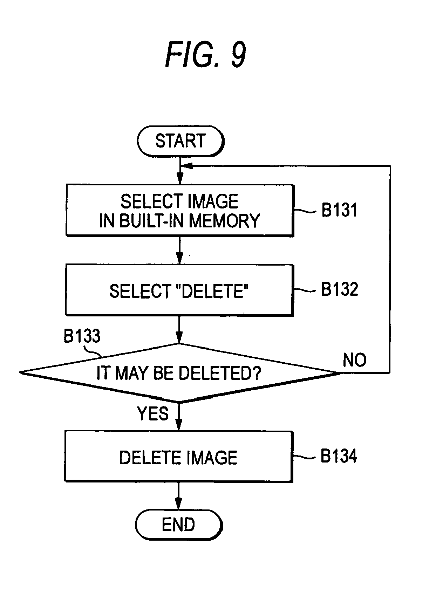

When "DELETION" is selected, the selecting operation is detected and it is detected whether the still image data acquired from the external device is stored in the flash memory 26 as shown in block B131 of Fig. 9. With the detection, the still image acquired from the external device is selected in the flash memory 26. When plural still images are stored in the flash memory 26, the still image data acquired from the external device is displayed in the format of thumbnails shown in section (c) of Fig. 5. When a still image to be deleted is selected in the display of the thumbnail format, the selected still image is displayed as a selected image to be deleted as shown in section (d) of Fig. 8. When a single still image is stored in the flash memory 26, it is detected in block B 132 that the single still image data is selected and the single still image data is displayed as still image data to be deleted as shown in section (d) of Fig. 8. When a delete request is selected in the confirmation screen, this selection is detected in block B 132 and there is a display on the screen to inquire whether it should be deleted. When "YES" is selected in the display, the selected image in the flash memory 26 is deleted in block B134. When "NO" is selected in block B133, the deletion is cancelled and it is detected in block B 131 whether the still image data is stored in the flash memory 26. When a return request is detected in block B131, the operation of selecting "DELETION" is stopped and the digital photo frame setting screen is returned. When all the still image data acquired from an external device is deleted in block B 134, a pre-installed default image is displayed as shown in section (e) of Fig. 8.

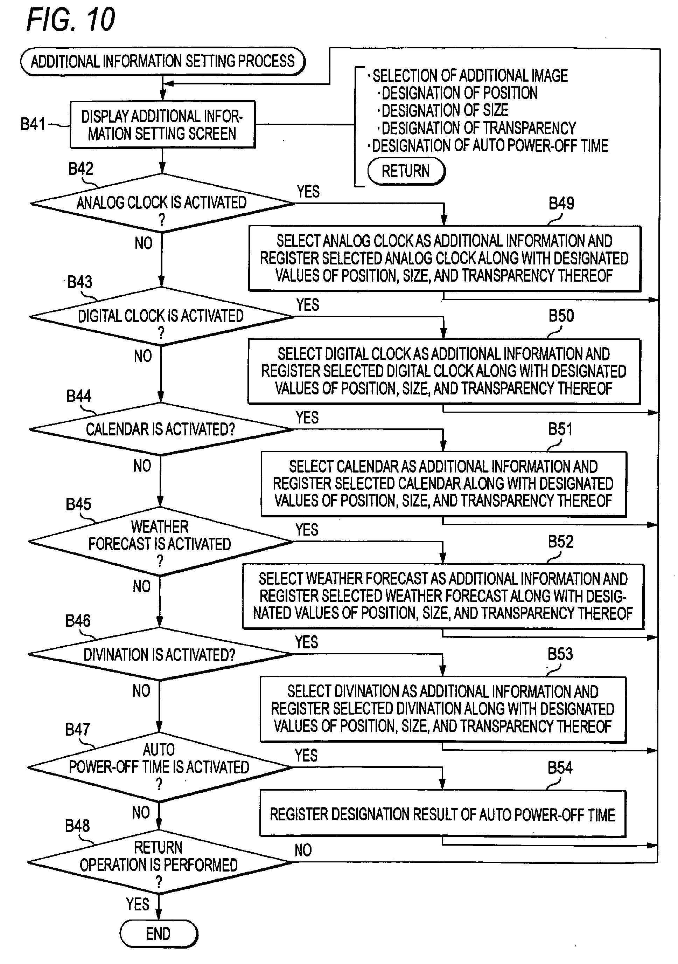

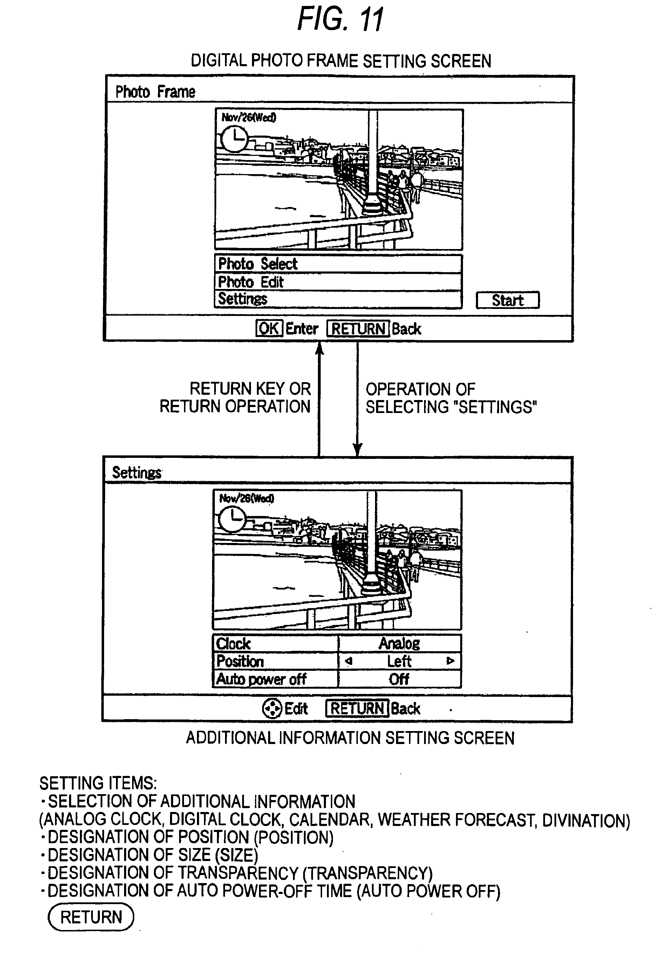

Fig. 10 is a diagram specifically illustrating the additional information setting process shown in Fig. 3, and Fig. 11 is a diagram illustrating the change of a display screen which can be obtained when "SETTING OF ADDITIONAL INFORMATION" is selected in the digital photo frame setting screen shown in Fig. 5. In the additional information setting process, the additional information setting screen is displayed in block B41. The additional information setting screen includes selection items such as "SELECTION OF ADDITIONAL INFORMATION", "DESIGNATION OF AUTO POWER-OFF TIME", and "RETURN." In "SELECTION OF ADDITIONAL INFORMATION", one out of "ANALOG CLOCK", "DIGITAL CLOCK", "CALENDAR", "WEATHER FORECAST", and "DIVINATION" is designated as types of additional information by operating the left and right direction keys 52 and the designated type of additional information is changed to the ON state by operating the decision key 53. In addition, the additional information is changed to the OFF state by re-operating the decision key 53. "SELECTION OF ADDITIONAL INFORMATION" includes setting items such as "DESIGNATION OF POSITION", "DESIGNATION OF SIZE", AND "DESIGNATION OF TRANSPARENCY" "SELECTION OF ADDITIONAL INFORMATION", "DESIGNATION OF AUTO POWER-OFF TIME", "RETURN", "DESIGNATION OF POSITION", "DESIGNATION OF SIZE", and "DESIGNATION OF TRANSPARENCY" are selected by operating the up and down direction keys 52. In "DESIGNATION OF POSITION", for example, one out of "LEFT UPPER", "RIGHT UPPER", "LEFT LOWER", and "RIGHT LOWER" in the display screen is designated by operating the left and right direction keys 52. In "DESIGNATION OF SIZE", for example, one out of "LARGE", "MIDDLE", and "SMALL" is designated by operating the left and right direction keys 52. In "DESIGNATION OF TRANSPARENCY", for example, one out of "HIGH", "MIDDLE", and "LOW" is designated by operating the left and right direction keys 52. In addition, for example, "LEFT UPPER", "MIDDLE", and "SMALL" are designated respectively as defaults for "DESIGNATION OF POSITION", "DESIGNATION OF SIZE", and "DESIGNATION OF TRANSPARENCY" and these are changed as needed. In "DESIGNATION OF AUTO POWER-OFF TIME", "HOUR" and "MINUTE" are changed by operating the left and right direction keys 52, and hour is designated in the range of 0 to 24 and minute is designated in the range of 0 to 60 by operating the up and down direction keys 52.

After the additional information setting screen is displayed, with regard to "SELECTION OF ADDITIONAL INFORMATION", it is determined in blocks B42 to B46 whether each of "ANALOG CLOCK", "DIGITAL CLOCK", "CALENDAR", "WEATHER FORECAST", AND "DIVINATION" is in the ON state, and "DESIGNATION OF AUTO POWER-OFF TIME" and "RETURN" are checked in blocks B47 and B48.

When it is detected in block B42 that "ANALOG CLOCK" is activated, the process of block B49 is performed. In block B49, the analog clock is the selection result (that is, type information) of the additional information and the selection result is registered in the flash memory 26 along with the designated values (that is, setting information) of position, size, and transparency of the analog clock. When it is detected in block B43 that "DIGITAL CLOCK" is activated, the process of block B50 is performed. In block B50, the digital clock is the selection result of the additional information and the selection result is registered in the flash memory 26 along with the designated values of position, size, and transparency of the digital clock. When it is detected in block B44 that "CALENDAR" is activated, the process of block B51 is performed. In block B51, the calendar is the selection result of the additional information and the selection result is registered in the flash memory 26 along with the designated values of position, size, and transparency of the calendar. When it is detected in block B45 that "WEATHER FORECAST" is activated, the process of block B52 is performed. In block B52, the weather forecast is the selection result of the additional information and the selection result is registered in the flash memory 26 along with the designated values of position, size, and transparency of the weather forecast. When it is detected in block B46 that "DIVINATION" is activated, the process of block B53 is performed. In block B53, divination is the selection result of the additional information and the selection result is registered in the flash memory 26 along with the designated values of position, size, and transparency of the divination.

When it is detected in block B47 that "DESIGNATION OF AUTO POWER-OFF TIME" is selected, the process of block B54 is performed. In block B54, the designation result of the auto power-off time is registered in the flash memory 26. The processes of blocks B41 to B48 are repeatedly performed until the operation of "RETURN" is detected. The additional information setting process is ended with the detection of the "RETURN" operation.

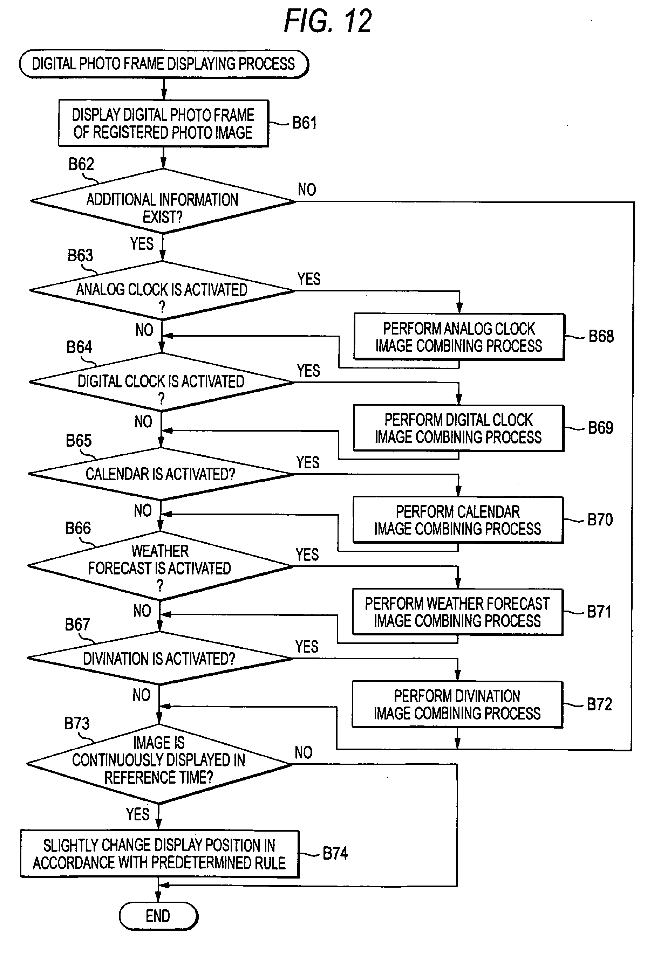

Fig. 12 specifically shows the digital photo frame displaying process shown in Fig. 3. The micro processor 10 performs the displaying process using photo reproducing components corresponding to the signal processor 16, the graphic processor 17, the OSD signal generator 18, and the image processor 19 as control targets. In the displaying process, the favorite photo image registered in the flash memory 26 is continuously displayed as a digital photo frame on the display unit 20 in block B61.

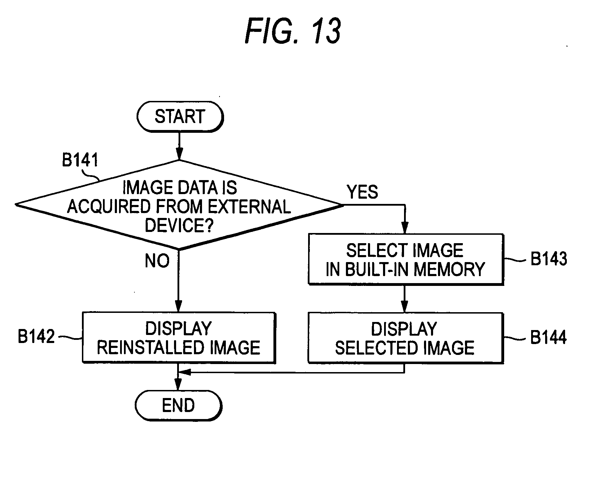

More specifically describing block B61, as shown in Fig. 13, it is determined in block B 141 whether image data acquired from an external device is registered in the flash memory 26. When it is determined in block B141 that the image data acquired from the external memory is not registered as a registered image, a preinstalled image registered in advance by the maker is detected and displayed in block B142 and the process is ended. When it is determined in block B141 that the image data acquired from the external device is registered as a registered image, a selection screen for displaying selectable registered images is displayed in the format of thumbnails. When it is determined in block B 143 that a registered image is selected in the selection screen, the selected image is displayed in block B144. When the decision key is pressed in the screen, the photo image is continuously displayed as a digital photo frame on the display unit 20.

In block B62 shown in Fig. 12, it is determined whether the additional information on the digital photo frame exists. When it is determined that the additional information exists, it is determined in blocks B63 to B67 whether "ANALOG CLOCK", "DIGITAL CLOCK", "CALENDAR", "WEATHER FORECAST", and "DIVINATION" are activated, respectively. When it is determined in block B63 that "ANALOG CLOCK" is activated, an analog clock image combining process is performed in block B68. When it is determined in block B64 that "DIGITAL CLOCK" is activated, a digital clock image combining process is performed in block B69. When it is determined in block B65 that "CALENDAR" is activated, a calendar image combining process is performed in block B70. When it is determined in block B66 that "WEATHER FORECAST" is activated, a weather forecast image combining process is performed in block B71. When it is determined in block B67 that "DIVINATION" is activated, a divination image combining process is performed in block B72.

When it is determined in block B62 that no additional information exists and when it is determined that an image combining process on all the additional information to be added to the digital photo frame is finished, it is determined whether the photo image or the additional information image is displayed over a reference time determined to prevent burn-in depending on characteristics of the display unit 20 in block B74. When it is determined that the reference time has been exceeded, the display position of the image is slightly changed in accordance with a predetermined rule in block B74. The photo displaying process is ended after the process of block B74 is performed or after it is determined in block B73 that the reference time has not been exceeded.

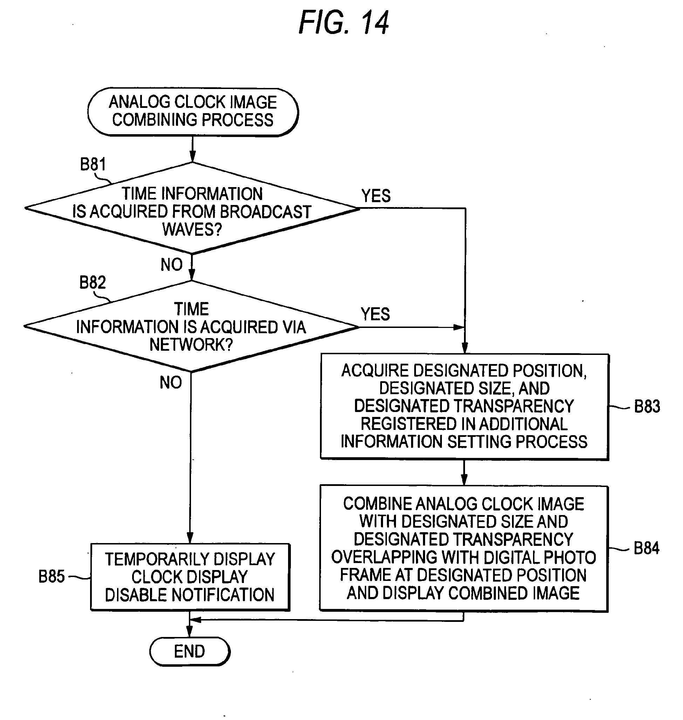

Fig. 14 specifically shows the analog clock image combining process shown in Fig. 12. In the image combining process, it is determined in block B111 whether the time information could be acquired from the broadcast waves and it is also determined in block B112 whether the time information could be acquired from the network. When it is determined in one of blocks B111 and B 112 that the time information (that is, basic data as additional information) is acquired, the process of block B113 is performed. In block B113, the setting information of the designated position, the designated size, and the designated transparency registered in the additional information setting process is acquired from the flash memory 26 along with the image subject information on the analog clock. In block B114, the analog clock image with the designated size and the designated transparency overlapping at the designated position is combined with the digital photo frame and the resultant image is displayed. The analog clock image is combined from the image subject information so as to show the analog clock (additional information) corresponding to the acquired time information (hour and minute of the current time). On the other hand, when it is determined in blocks B111 and B112 that the time information is not acquired, the process of block B115 is performed. In block B115, a message is temporarily displayed which indicates that the display of a clock is not possible. The analog clock image combining process is ended after the process of block B 114 or B115 is performed. However, the digital photo frame is continuously displayed, for example, so long as the channel keys 56 of the remote controller 25 are not operated. Here, the displayed time is updated by one minute by the time circuit 35.

The digital clock image combining process is similar to the analog clock image combining process, except that the image subject information of the analog clock is changed to the image subject information of the digital clock.

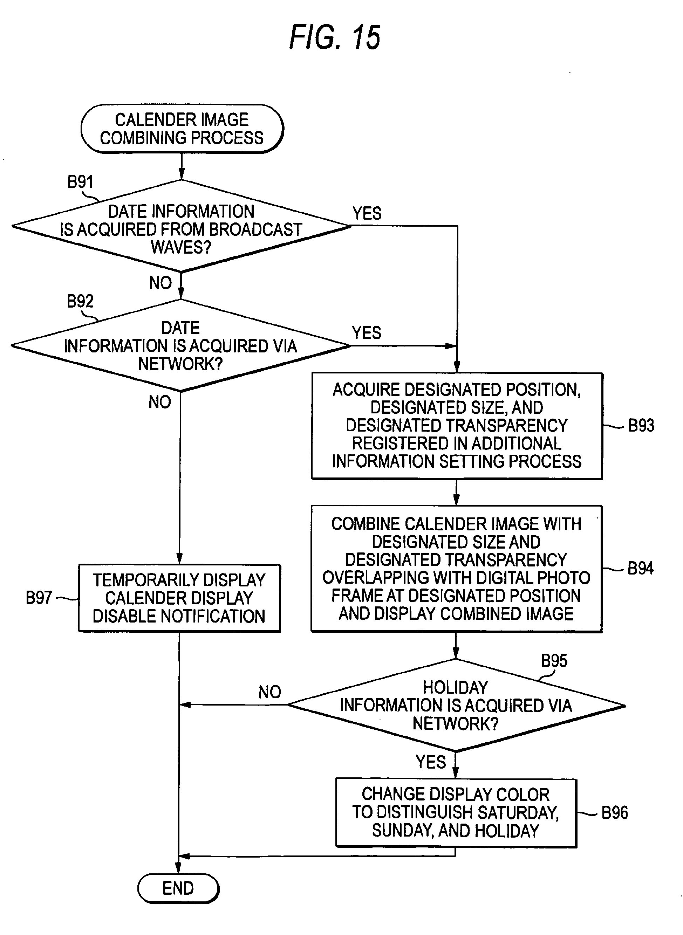

Fig. 15 specifically shows the calendar image combining process shown in Fig. 12. In the image combining process, it is determined in block B121 whether the date information could be acquired from the broadcast waves and it is also determined in block B122 whether the date information could be acquired from the network. When it is determined in one of blocks B121 and B122 that the date information (that is, basic data as additional information) is acquired, the process of block B123 is performed. In block B123, the setting information of the designated position, the designated size, and the designated transparency registered in the additional information setting process is acquired from the flash memory 26 along with the image subject information on the calendar. In block B124, the calendar image with the designated size and the designated transparency overlapping at the designated position is combined with the digital photo frame and the resultant image is displayed. The calendar image is combined from the image subject information so as to show the calendar (additional information) corresponding to the acquired date information (year, month, and day of the current date). In block B125, it is determined whether holiday information could be acquired from the network. Here, when it is determined that the holiday information could be acquired, Saturdays, Sundays, and holidays on the calendar are changed to a display color for distinguishing them from weekdays on the basis of the holiday information in block B126. On the other hand, when it is determined in blocks B121 and B122 that the date information is not acquired, the process of block B127 is performed. In block B127, a message is temporarily displayed which indicates that the display of a calendar is not possible. The calendar image combining process is ended after the process of block B126 or B127 is performed or after it is determined in block B125 that the holiday information could not be acquired. However, the digital photo frame is continuously displayed, for example, so long as the channel keys 56 of the remote controller 25 are not operated. Here, the displayed date is updated by one day by the time circuit 35.

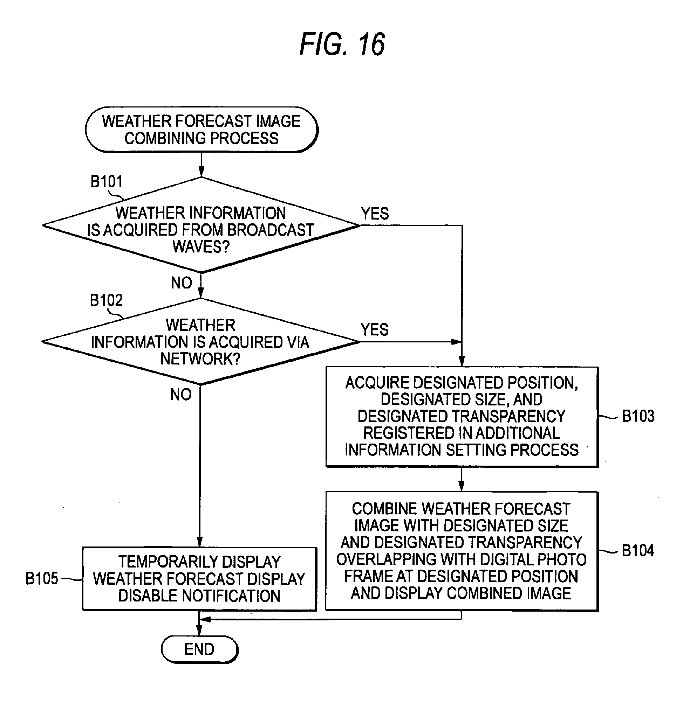

Fig. 16 specifically shows the weather forecast image combining process shown in Fig. 12. In the image combining process, it is determined in block B131 whether the weather information could be acquired from the broadcast waves and it is also determined in block B132 whether the weather information could be acquired from the network. When it is determined in one of blocks B131 and B132 that the weather information (that is, basic data as additional information) is acquired, the process of block B133 is performed. In block B133, the setting information of the designated position, the designated size, and the designated transparency registered in the additional information setting process is acquired from the flash memory 26 along with the image subject information on the weather forecast. In block B134, the weather forecast image with the designated size and the designated transparency overlapping at the designated position is combined with the digital photo frame and the resultant image is displayed. The weather forecast image is combined from the image subject information so as to show the weather forecast (additional information) corresponding to the acquired weather information. In this case, the weather forecast image may be a symbol such as clear, rainy, and cloudy. On the other hand, when it is determined in blocks B131 1 and B 132 that the weather information is not acquired, the process of block B135 is performed. In block B135, a message is temporarily displayed which indicates that the display of weather forecast is not possible. The weather forecast image combining process is ended after the process of block B134 or B135 is performed. However, the photo is continuously displayed, for example, so long as the channel keys 56 of the remote controller 25 are not operated.

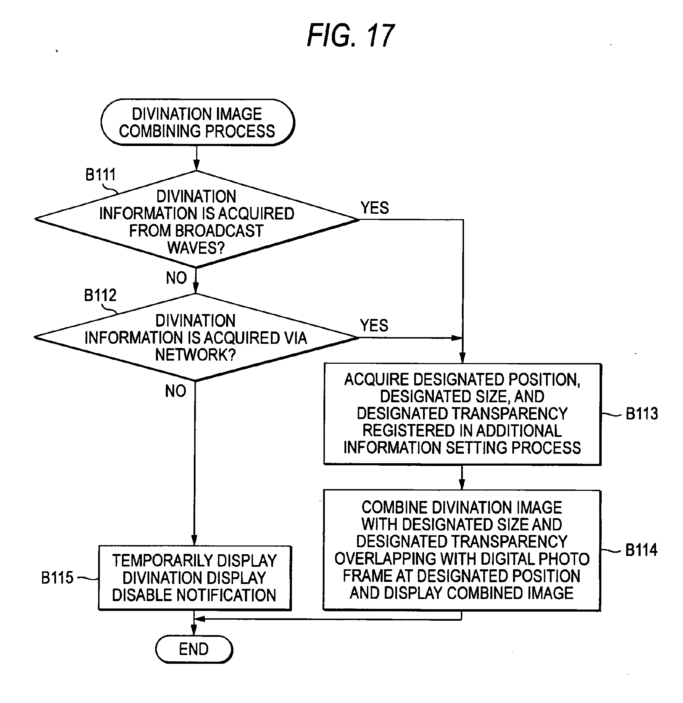

Fig. 17 specifically shows the divination image combining process shown in Fig. 12. In the image combining process, it is determined in block B111 whether the divination information could be acquired from the broadcast waves and it is also determined in block B 112 whether the divination information could be acquired from the network. When it is determined in one of blocks B111 and B112 that the divination information (that is, basic data as additional information) is acquired, the process of block B113 is performed. In block B 113, the setting information of the designated position, the designated size, and the designated transparency registered in the additional information setting process is acquired from the flash memory 26 along with the image subject information of the divination. In block B114, the divination image with the designated size and the designated transparency overlapping at the designated position is combined with the photo and the resultant image is displayed. The divination image is combined from the image subject information so as to show the divination (additional information) corresponding to the acquired divination information. In this case, the divination image may be divination symbols such as good luck, luck, and bad luck. On the other hand, when it is determined in blocks B111 and B 112 that the divination information is not acquired, the process of block B115 is performed. In block B115, a message is temporarily displayed which indicates that the display of divination is not possible. The divination image combining process is ended after the process of block B114 or B 115 is performed. However, the photo is continuously displayed, for example, so long as the channel keys 56 of the remote controller 25 are not operated.

In the TV set according to the above-mentioned embodiment, it is possible to construct a display system capable of displaying a photo. That is, the digital photo frame function is given to the TV set and still images from an external memory can be stored in and erased from the memory of the TV set. Accordingly, the still images can be displayed as favorite photo images on the display unit (display). Any scene of a program in broadcast can be taken as a still image into the memory of the TV set and the still image can be displayed as a photo image on the display unit (display), similarly. Accordingly, it is possible to improve the convenience of the display function on the TV set. The still images in the memory of the TV set can be selected or deleted on the basis of the user-friendly screen display. Accordingly, from this point of view, it is also possible to improve the convenience of the display function of the TV set.

In this display system, when the digital photo frame mode is set, a favorite photo image stored in the nonvolatile memory is displayed as a digital photo frame, and the image displaying process is performed by the independent additional information setting operation which involves acquiring the basic data of the additional information relating to the digital photo frame, combining the additional information image to indicate the additional information corresponding to the basic data, and overlapping the additional information image with the displayed digital photo frame. The additional information may be, for example, clock, calendar, weather forecast, and divination and the basic data thereof can be acquired as texts of time information, date information, weather information, and divination information using the broadcast waves or the Internet. In independently setting the additional information, for example, the position, size, and transparency of the additional information image can be set. When the additional information image is overlapped with the digital photo frame, the additional information image does not make the user feel bored with the display of the digital photo frame in spite of the extended display of the photo, thereby improving the convenience of the digital photo frame function. Accordingly, it is possible to avoid a marked decrease in the frequency of using the digital photo frame function.

The system according to the invention is not limited to the above-mentioned embodiment, but may be modified in various forms.

In the above-mentioned embodiment, the TV set is described. However, the invention is not limited to the TV set, but it is clear that the invention may be embodied as a receiver not including a display unit but being connected to the TV set, for example, a BS or CS receiver or a cable TV set (so-called set box).

In the above-mentioned embodiment, "ANALOG CLOCK", "DIGITAL CLOCK", "CALENDAR", "WEATHER FORECAST", and "DIVINATION" are selectively activated as the additional information, but the additional information may be replaced with other additional information.

The additional information image is combined and overlapped with the digital photo frame so as to indicate a combination of the types of additional information selected by the operation module such as the remote controller 25, but only predetermined single additional information may be overlapped with the digital photo frame.

In the above-mentioned embodiment, the image subject information as the additional information registered in advance in the flash memory 26 cannot be changed. However, for all additional information, the image subject information may be redundantly registered in advance and the additional information image may be combined with the image subject information arbitrarily combined by the user as a part of the additional information setting process.

In the above-mentioned embodiment, the flash memory 26 is used as the nonvolatile memory. However, for example, a hard disk connected to the TV set for recording may be used as the nonvolatile memory.

When plural favorite photo images are registered in the flash memory 26, the photo images are displayed as digital photo frames in the form of slide show. However, any one of the plural photo images registered in the flash memory 26 may be additionally specified and only the specific photo image may be displayed as the digital photo frame.

Various modules of the above-mentioned system can be embodied by components of one or more computers such as a software application, a hardware and/or software module, or a server. The various modules may be separated from each other or may be distributed to all or part of basic logics or codes.

According to the display system and the display method thus described, the digital photo frame display function can be assigned to a TV set and still images from an external memory can be stored in and erased from the memory of the TV set. Accordingly, the still images can be displayed as favorite photo images on a display unit (display). Particularly, in the still image display mode, additional information can be added to a still image displayed in a digital photo frame and the additional information can be set on the basis of a user-friendly screen display. The additional information may be, for example, clock, calendar, weather forecast, and divination, and basic data thereof can be acquired as texts of time information, date information, weather information, and divination information using broadcast waves or the Internet. In independently setting the additional information, for example, the position, size, and transparency of the additional information image can be set. When the additional information image is overlapped with the favorite still image, the additional information image does not make a user feel bored with the display of the still image in spite of the extended display of the still image, thereby improving the convenience of the still image displaying function.

Any scene from a broadcast program can be taken as a still image in the memory of the TV set and this still image can be similarly displayed as a photo image on a display unit (display). Therefore, it is possible to improve the convenience of the display function of the TV set. The still images in the memory of the TV set can be selected or deleted on the user-friendly screen display, thereby further improving the convenience of the display function of the TV set.

Although the embodiment according to the present invention has been described above, the present invention is not limited to the above-mentioned embodiment but can be variously modified.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A display system comprising:
a connector unit configured to be connected to an external memory;
an operation module configured to set a still image selection mode and a still image display mode;
a still image selector configured to determine whether still images are stored in the external memory connected to the connector unit and to transmit the selected still image from the external memory in response to a selection input from the operation module during the still image selection mode;
a nonvolatile memory configured to store the selected still image transmitted from the external memory; and
a signal processor configured to generate a still image display signal for displaying a still image stored in the nonvolatile memory in response to a still image display input from the operation module during the still image display mode.

2. The system according to Claim 1, wherein the signal processor is configured to generate a video signal from a broadcast signal,
wherein the operation module includes an instruction unit configured to instruct the acquiring of a still image from a scene included in the video signal, and
wherein the still image selector is configured to transmits the acquired scene still image to the nonvolatile memory in response to the instruction to acquire the scene still image from the instruction unit.

3. The system according to Claim 1, wherein the signal processor is configured to generate an image signal of a selection screen for displaying a list of still images stored in the external memory and selects the still image to be transmitted depending on input from the operation module with reference to the selection screen during the still image selection mode.

4. The system according to Claim 1, wherein the signal processor is configured to generate an image signal of a selection screen for displaying a type of connector unit connected to the external memory and to select the type of connector unit depending on input from the operation module with reference to the selection screen during the still image selection mode.

5. The system according to Claim 1, wherein the signal processor is configured to generate an image signal of a selection screen for displaying a list of still images stored in the nonvolatile memory and to select the still image to be displayed depending on input from the operation module with reference to the selection screen during the still image display mode.

6. The system according to Claim 1, wherein the signal processor is configured to generate an image signal of a selection screen for displaying a list of still images stored in the nonvolatile memory and to specify the still image to be deleted depending on input from the operation module with reference to the selection screen in the still image display mode, and
wherein the still image selector is configured to delete the specified still image from the nonvolatile memory.

7. The system according to Claim 1, wherein the nonvolatile memory is configured to store a default still image and the signal processor generates an image signal of the default still image during the still image display mode when the still image selector detects that the external memory is not connected to the connector unit or that the still images are not stored in the external memory.

8. A display method for a system having a still image selection mode for selecting a still image to be transmitted, the method comprising:
detecting that still images are stored in an external memory connected to a connector unit;
transmitting the selected still image from the external memory to a nonvolatile memory in response to input on the selection of a still image;
storing the still image in the nonvolatile memory;
selecting the still image from the nonvolatile memory in response to still image display input; and
generating and displaying a still image displaying signal for displaying the selected still image.
